# EUROPEAN PATENT APPLICATION

(11) **EP 4 604 205 A1**
(43) Date of publication of application: **20.08.2025**
(21) Application number: 24869710.4
(22) Date of filing: 30.04.2024
(51) Int. Cl.: H01M 4/36, H01M 4/62, H01M 10/0525

(54) **NEGATIVE ELECTRODE MATERIAL, PREPARATION METHOD THEREFOR, AND LITHIUM-ION BATTERY**

(30) Priority: 27.09.2023 CN 202311277415
(71) Applicant: BTR New Material Group Co., Ltd., Shenzhen, Guangdong 518106 (CN); Dingyuan New Energy Technology Co., Ltd., Huizhou, Guangdong 516227 (CN)
(72) Inventor: XIE, Wei, Shenzhen, Guangdong 518106 (CN); DENG, Zhiqiang, Shenzhen, Guangdong 518106 (CN); GUO, Songtao, Shenzhen, Guangdong 518106 (CN); LI, Fangru, Shenzhen, Guangdong 518106 (CN); PANG, Chunlei, Shenzhen, Guangdong 518106 (CN); REN, Jianguo, Shenzhen, Guangdong 518106 (CN); HE, Xueqin, Shenzhen, Guangdong 518106 (CN)
(74) Representative: Müller Schupfner & Partner Patent- und Rechtsanwaltspartnerschaft mbB (Muc)
(86) International application number: PCT/CN2024/090897
(87) International publication number: WO 2025/066142

(57) **Abstract**

Provided are an anode material and a preparation method thereof, and a lithium ion battery. The anode material comprises a silicon-based core and a coating layer on at least part of a surface of the silicon-based core. The silicon-based core comprises silicon oxide and lithium silicate, and the coating layer comprises a carbon material. 20mg of the anode material is dissolved in 10ml of deionized water to form a slurry, and a Zeta potential of the slurry is tested using a nano-particle size Zeta potential analyzer, in a Zeta potential test distribution chart of the slurry, an intensity of a first characteristic peak in a Zeta potential range of -50mV to -40mV is denoted as I₁, an intensity of a second characteristic peak in a Zeta potential range of -65mV to -50mV is denoted as I₂, and an intensity of a third characteristic peak in a Zeta potential range of -35mV to -25mV is denoted as I₃, and a relationship among I₁, I₂, and I₃ satisfies: 0≤I₂/I₁≤2.0, and 0≤I₃/I₁≤1.0. The technical solution of the present disclosure can be used to reduce the volume expansion of the anode material, and improve the rate performance and the cycle performance of the anode material.

## Description

This application claims priority to Chinese Patent Application No. 2023112774159, entitled "Anode Material and Preparation Method Thereof, and Lithium Ion Battery," filed on September 27, 2023, the entire contents of which are incorporated herein by reference.

### TECHNICAL FIELD

The present disclosure relates to the technical field of anode materials, and in particular, to an anode material and a preparation method thereof, and a lithium ion battery.

### BACKGROUND

Lithium ion batteries have the advantages such as high energy density, long cycle life, low environmental pollution, and no memory effect, and thus are widely used in electric vehicles and consumer electronics. An anode material is a key component of the lithium ion batteries, directly influencing crucial indexes such as energy density, cycle life, and safety performance of the battery. With the increasing demand for longer driving range in electric vehicles, power battery related materials are evolving towards providing higher energy density. Graphite anodes of the traditional lithium ion batteries can no longer meet current demands, and high energy density anode materials have become a new focus for enterprises.

Silicon-based anode materials are among the most critical materials for high energy density lithium ion batteries. However, existing silicon-based anode materials face issues such as large volume expansion and poor rate performance, which affects the widespread application of silicon-based anode materials in the lithium ion batteries. At present, coating the silicon-based anode materials with single carbon materials is a common choice. The carbon material can improve the conductive problem of the material, but existing carbon material coating layer technologies still have many shortcomings.

Therefore, developing an anode material with excellent cycle performance and low volume expansion effects and a preparation method thereof is still a technical challenge in the field.

### SUMMARY

An embodiment of the present disclosure provides an anode material and a preparation method thereof, and a lithium ion battery, aiming to reduce the volume expansion of the anode material and improve the rate performance and the cycle performance of the anode material.

According to a first aspect, an embodiment of the present disclosure provides an anode material. The anode material includes a silicon-based core and a coating layer on at least a part of a surface of the silicon-based core. The silicon-based core includes silicon oxide and lithium silicate, and the coating layer includes a carbon material.

20mg of the anode material is dissolved in 10ml of deionized water to form a slurry, and a Zeta potential of the slurry is tested using a nano-particle size and a Zeta potential analyzer, in a Zeta potential test distribution chart of the slurry, a highest intensity of a first characteristic peak in a Zeta potential range of -50mV to -40mV is denoted as I₁, a highest intensity of a second characteristic peak in a Zeta potential range of -65mV to -50mV is denoted as I₂, and a highest intensity of a third characteristic peak in a Zeta potential range of -35mV to -25mV is denoted as I₃, and a relationship among I₁, I₂, and I₃ satisfies: 0≤I₂/I₁≤2.0, and 0≤I₃/I₁≤1.0.

According to a second aspect, an embodiment of the present disclosure provides a preparation method of the anode material, including the following steps: performing vapor deposition on a surface of a silicon-based core using simultaneously a coating agent and a coating gas source containing a gaseous phase carbon source to form a coating layer, and obtaining the anode material. The coating agent is a non-gaseous phase coating agent containing a benzene ring structure, and the silicon-based core includes silicon oxide and lithium silicate.

According to a third aspect, an embodiment of the present disclosure provides a lithium ion battery. The lithium ion battery includes the anode material according to the first aspect or the preparation method of the anode material according to the second aspect.

Compared with the related art, the technical solution of the present disclosure has at least the following beneficial effects:
The anode material provided by the present disclosure includes the silicon-based core and the coating layer located on the surface of the silicon-based core. The coating layer includes the carbon material, and the coating layer can effectively isolate the silicon-based core from exposure to the electrolyte, reducing the loss of active silicon and active lithium in the silicon-based core, and improving the cycle performance of the anode material. The silicon-based core includes the silicon oxide and thy lithium silicate. After the anode material is prepared into the slurry, the Zeta potential of the slurry is tested using the nano-particle size and the Zeta potential analyzer. In the Zeta potential test distribution chart of the slurry, I₁, I₂, and I₃ represent the existence forms and contents of the carbon material, the lithium silicate and the silicon oxide on the surface of the anode material, respectively. That is, the surface of the anode material can have a combination of multiple substances such as lithium silicate, carbon material and silicon oxide, and when the relationship among I₁, I₂, and I₃ satisfies: 0≤I₂/I₁≤2.0, and 0≤I₃/I₁≤1.0, the interface reaction between the anode material and the electrolyte is favorable, so that a high-speed mass and charge transfer interface between the anode material and the electrolyte is established, and the mass and charge transfer efficiency of the anode material is improved, thereby improving the rate performance of the anode material. By controlling the solid-liquid reaction between the surface of the anode material and the electrolyte, a stable Solid Electrolyte interface (SEI) can be formed on the surface of the anode material, so that the degradation of the electrolyte is reduced, and the cyclic expansion of the anode plate is suppressed, thereby improving the cycle performance of the anode material.

According to the preparation method of the anode material provided by the present disclosure, the anode material is prepared by performing the vapor deposition on the silicon-based core using a gaseous phase carbon source. Meanwhile, a solid-phase coating agent and/or a liquid-phase coating agent are added for the vapor deposition. During the vapor deposition, due to different dissociation efficiencies of the different carbon sources at the same temperature, the deposition efficiencies on the surface of the silicon-based core also varies. Different types of carbon sources are sequentially deposited on the surface of the silicon-based core, so that differential deposition can be formed on the surface of the silicon-based core. The carbon material formed by dissociation of the gaseous phase carbon source is deposited on the surface of the silicon-based core to form the coating layer. Simultaneously, the carbon material formed by dissociation of the solid-phase coating agent and/or the liquid-phase coating agent is deposited into the coating layer and buried in the coating layer. Since the solid-phase coating agent and/or the liquid-phase coating agent contain the benzene ring structure, which is mainly derived from aromatic low-melting-point organic compounds, these organic compounds can further modify and functionalize the surface of the coating layer during the carbonization process, so that the surface of the coating layer of the anode material is optimized, and the surface of the anode material can be regulated, thereby controlling the solid-liquid interface reaction between the anode material and the electrolyte, and improving the processing performance and the cycle performance of the anode material.

### BRIEF DESCRIPTION OF DRAWINGS

FIG. 1 is a process flow chart of a preparation method of an anode material according to an example of the present disclosure;
FIG. 2 is a Zeta potential test distribution chart of a anode material according to Example 1 of the present disclosure;
FIG. 3 is a Zeta potential test distribution chart of a anode material according to Example 2 of the present disclosure;
FIG. 4 is a Zeta potential test distribution chart of a anode material according to Example 3 of the present disclosure;
FIG. 5 is a Zeta potential test distribution chart of a anode material according to Example 4 of the present disclosure;
FIG. 6 is a Zeta potential test distribution chart of a anode material according to Example 5 of the present disclosure;
FIG. 7 is a Zeta potential test distribution chart of a anode material according to Comparative Example 1 of the present disclosure; and
FIG. 8 is a Zeta potential test distribution chart of an anode material according to Comparative Example 2 of the present disclosure.

### DESCRIPTION OF EMBODIMENTS

In order to better understand the technical solutions of the present disclosure, embodiments of the present disclosure are described in detail as follows with reference to the drawings.

It is to be made clear that the described embodiments are only some rather than all of the embodiments of the present disclosure. Based on the embodiments the present disclosure, all other embodiments obtained by those skilled in the art without any creative efforts fall within the scope of the present disclosure.

The terms used in the embodiments of the present disclosure are only for the purpose of describing specific embodiments, and are not intended to limit the present disclosure. The singular forms of "a", "the", and "this" used in the embodiments of the present disclosure and the appended claims are further intended to include the plurality form, unless the context clearly indicates other meanings.

It should be understood that the term "and/or" used herein is merely an association relationship describing an associated object, and indicates that there may be three relationships, for example, A and/or B, and may indicate: only A, both A and B, and only B. In addition, the character "/" herein generally means an "or" relationship between the preceding and subsequent associated objects.

According to a first aspect, an example of the present disclosure provides an anode material. The anode material includes a silicon-based core and a coating layer on at least a part of a surface of the silicon-based core. The silicon-based core includes silicon oxide and lithium silicate, and the coating layer includes a carbon material.

20mg of the anode material is dissolved in 10ml of deionized water to form a slurry, and a Zeta potential of the slurry is tested using a nano-particle size and a Zeta potential analyzer. In a Zeta potential test distribution chart of the slurry, a highest intensity of a first characteristic peak in a Zeta potential range of -50mV to -40mV is denoted as I₁, a highest intensity of a second characteristic peak in a Zeta potential range of -65mV to -50mV is denoted as I₂, and a highest intensity of a third characteristic peak in a Zeta potential range of -35mV to -25mV is denoted as I₃. A relationship among I₁, I₂, and I₃ satisfies: 0≤I₂/I₁≤2.0, and 0≤I₃/I₁≤1.0.

The anode material provided by the present disclosure includes the silicon-based core and the coating layer located on the surface of the silicon-based core. The material of the coating layer includes the carbon material, and the coating layer can effectively isolate the silicon-based core from exposure to the electrolyte, reducing the loss of active silicon and active lithium in the silicon-based core, and improving the cycle performance of the anode material. The silicon-based core includes the silicon oxide and thy lithium silicate. After the anode material is prepared into the slurry, the Zeta potential of the slurry is tested using the nano-particle size and the Zeta potential analyzer. In the Zeta potential test distribution chart of the slurry, I₁, I₂, and I₃ represent the existence forms and contents of the carbon material, the lithium silicate and the silicon oxide on the surface of the anode material, respectively. That is, the surface of the anode material can have a combination of multiple substances such as lithium silicate, carbon material and silicon oxide, and when the relationship among I₁, I₂, and I₃ satisfies: 0≤I₂/I₁≤2.0, and 0≤I₃/I₁≤1.0, the interface reaction between the anode material and the electrolyte is favorable, so that a high-speed mass and charge transfer interface between the anode material and the electrolyte is established, and the mass and charge transfer efficiency of the anode material is improved, thereby improving the rate performance of the anode material. By controlling the solid-liquid reaction between the surface of the anode material and the electrolyte, a stable Solid Electrolyte interface (SEI) can be formed, so that the degradation of the electrolyte is reduced, and the cyclic expansion of the anode plate is suppressed, thereby improving the cycle performance of the anode material.

It should be noted that, in the Zeta potential test distribution chart of the slurry of the anode material, if no complete peak shape is formed in the region (the center of the peak is not in the region, and no peak is formed in the entire region), the value with the highest intensity (total number) is selected and read as the value I of the intensity (total number) of the region.

For example, I₂/I₁ may be specifically 0, 0.1, 0.3, 0.5, 0.7, 0.8, 0.9, 1.0, 1.1, 1.3, 1.5, 1.7, 1.8, or 2.0, etc., which is not limited herein. It should be noted that, when I₂ is 0, that is, the ratio of lithium silicate to the surface of the anode material is 0, indicating that the silicon-based core is substantially completely coated by the coating layer. I₃/I₁ may be specifically 0.1, 0.15, 0.2, 0.3, 0.4, 0.5, 0.6, 0.7, 0.8, 0.9, or 1.0, etc., which is not limited herein.

It can be understood that when the ratio of I₂/I₁ is greater than 2, the rationality of charge ion distribution on the surface of the anode material decreases, and the surface of the anode material tends to be singulated from diversity, so that during the slurry mixing process, the zeta potential changes, causing the dispersion of the slurry to decrease and the slurry to produce gas. In addition, during the electrochemical reaction, the electrolyte may be excessively degraded and deposited on an anode plate, causing the electrode plate to expand, thereby affecting the safety performance and the cycle performance of the lithium ion battery. By controlling the ratio of I₂/I₁ within the above range, the surface potential distribution of the anode material can be reasonable, and the surface of the anode material can have diversified characteristics. On one hand, the anode material can realize solid-liquid regulation during the slurry mixing process, and inhibit gas production, thereby improving the dispersibility of the slurry. On the other hand, during the electrochemical reaction, the degradation reaction and deposition mode with the electrolyte can be regulated, and the SEI interface is stabilized, relieving the volume expansion of the material, thereby improving the cycle performance of the anode material, and maximizing the electrochemical performance of the anode material. In addition, by controlling the ratio of I₂/I₁, the surface composition of the anode material can be regulated to establish a fast ion electron transport channel, thereby improving the conductivity of the anode material and the rate performance of the material, and reducing the active silicon and active lithium loss. When the ratio of I₃/I₁ is in the range of 0≤I₃I₁≤1.0, the surface of particles of the anode material has a certain hydrophilicity, the particles are easy to process and disperse, reducing the agglomeration and sedimentation of the anode material during processing. In addition, when 0≤I₂/I₁≤2.0 and 0≤I₃/I₁≤1.0 are both satisfied, the anode material reaches a balance between hydrophilicity and lipophilicity, thereby further improving the processing performance of the anode material and the infiltration efficiency of the electrolyte .

In some embodiments, the carbon material includes at least one of graphite, amorphous carbon, diamond-like carbon, carbon fiber, and carbide.

In some embodiments, the amorphous carbon includes soft carbon and hard carbon.

In some embodiments, the carbon material includes silicon carbide.

In some embodiments, the material of the coating layer further includes at least one of nitride, metal oxide, phosphate, and silicate.

In some embodiments, the nitride includes at least one of silicon nitride, pyrrole, and pyridine.

In some embodiments, the metal oxide includes at least one of titanium oxide, aluminum oxide, magnesium oxide, lithium oxide, zirconium oxide, cobalt oxide, and vanadium oxide.

In some embodiments, the phosphate includes at least one of lithium phosphate, aluminum phosphate, lithium aluminum *phosphate, lithium aluminum titanium phosphate, magnesium phosphate, lithium magnesium phosphate, calcium phosphate, lithium calcium phosphate, lithium dihydrogen phosphate, ammonium dihydrogen phosphate, diammonium hydrogen phosphate and triammonium phosphate.

In some embodiments, the silicate includes at least one of lithium silicate, magnesium silicate, aluminum silicate, magnesium aluminum silicate, lithium magnesium silicate, calcium silicate, magnesium calcium silicate, lithium calcium silicate, or lithium aluminum silicate.

In some embodiments, the thickness of the coating layer is 20nm to 700nm, which may specifically be 20nm, 50nm, 100nm, 150nm, 200nm, 250nm, 300nm, 350nm, 400nm, 450nm, 500nm, 550nm, 600nm, 650nm, or 700nm, etc., or may be another value within the above range, which is not limited herein. If the coating layer is too thick, the lithium ion transport efficiency decreases, which is not conducive to high-rate charge and discharge of the material, thereby reducing the comprehensive performance of the anode material. If the coating layer is too thin, the conductivity of the anode material is not improved, and the volume expansion inhibition performance of the material is weak, resulting in poor long cycle performance.

In some embodiments, the silicon oxide includes oxygen atoms and silicon atoms, and the molar ratio of the oxygen atoms to the silicon atoms is 0 to 2. Silicon oxide can be represented by the general formula SiOx (0<x≤2). It may be a material formed by dispersing silicon particles in SiO₂, or may be a material having a tetrahedral structural unit. The silicon atoms are located at the center of the tetrahedral structural unit, and the silicon atoms and the oxygen atoms are located at four vertices of the tetrahedral structural unit.

In some embodiments, the average particle size of the silicon-based core is 2.0µm to 10.0µm, which may specifically be 2.0µm, 3.0µm, 4.0µm, 5.0µm, 6.0µm, 7.0µm, 8.0µm, 9.0µm, or 10.0µm, etc., or may be another value within the above range, which is not limited herein.

In some embodiments, the lithium content in the silicon-based core is 10³ppm to 10⁵ppm, which may specifically be 1000ppm, 2000ppm, 5000ppm, 10000ppm, 30000ppm, 50000ppm, 80000ppm, or 100000ppm, etc., or may be another value within the above range, which is not limited herein.

In some embodiments, the lithium silicate has the general formula Li₂O-nSiO₂, where 0<n≤4. For example, a value of n may be 0.5, 1, 1.5, 2, 2.5, 3, 3.5, or 4, etc., which is not limited herein. Exemplarily, when the value of n is 1, the lithium silicate is Li₂O•SiO₂, and when the value of n is 2, the lithium silicate is Li₂O-2SiO₂, which will not be repeated herein.

In some embodiments, at least part of the lithium silicate is located on the surface of the silicon oxide, and the lithium silicate on the surface of the silicon oxide is dispersed.

In some embodiments, the anode material has an average particle size of 2µm to 12µm. For example, the average particle size of the anode material may be 2µm, 3µm, 4µm, 5µm, 6µm, 7µm, 8µm, 9µm, 10µm, 11µm, or 12µm, etc., which is not limited herein. The average particle size of the anode material is controlled within the above range, which facilitates to improve the cycle performance of the anode material. Preferably, the average particle size of the anode material is 2.0µm to 9.0µm.

In some embodiments, the specific surface area of the anode material is 0.5m²/g to 8.0m²/g, which may specifically be 0.5m²/g, 1.0m²/g, 2.0m²/g, 3.0m²/g, 4.0m²/g, 5.0m²/g, 6.0m²/g, 7.0m²/g, or 8.0m²/g, or may be another value within the above range, which is not limited herein. The specific surface area of the anode material is within the above range, ensuring the processing performance of the material, thereby improving the first efficiency of the lithium battery prepared from the anode material and the cycle performance of the anode material. Preferably, the anode material has a specific surface area of 1.0m²/g to 4.0m²/g.

In some embodiments, a tap density of the anode material is 0.5g/cm³ to 2.0g/cm³, which may specifically be 0.5g/cm³, 0.7g/cm³, 0.9g/cm³, 1.0g/cm³, 1.2g/cm³, 1.5g/cm³, 1.6g/cm³, 1.7g/cm³, 1.8g/cm³, 1.9g/cm³ or 2.0g/cm³, or may be another value within the above range, which is not limited herein. The tap density of the anode material is within the above range, which facilitates to improve the energy density of the lithium battery made of the anode material. Preferably, the tap density of the anode material is 0.7g/cm³ to 1.6g/cm³.

In some embodiments, the mass content of water in the anode material is 0.01% to 0.5%, which may specifically be 0.01%, 0.05%, 0.1%, 0.15%, 0.2%, 0.25%, 0.3%, 0.35%, 0.4%, 0.45% or 0.5%, or may be another value within the above range, which is not limited herein.

In some embodiments, based on the mass of the anode material being 100%, the mass content of the carbon material is 0.5% to 10%, which may specifically be 0.5%, 1%, 2%, 3%, 4%, 5%, 6%, 7%, 8%, 9%, or 10%, etc., or may be another value within the above range, which is not limited herein. Preferably, a mass ratio of the carbon material in the anode material is 2.5% to 8%.

In some embodiments, based on the mass of the anode material being 100%, the lithium content in the anode material is 2% to 15%, which may specifically be 2%, 3%, 4%, 5%, 6%, 7%, 8%, 9%, 10%, 11%, 12%, 13%, 14%, or 15%, etc., or may be another value within the above range, which is not limited herein.

In some embodiments, a pH value of the anode material is 10.0 to 12.3, which may specifically be 10.0, 10.3, 10.5, 10.8, 11.0, 11.2, 11.5, 11.7, 11.9, 12.0, 12.1, 12.2, or 12.3, or may be another value within the above range, which is not limited herein.

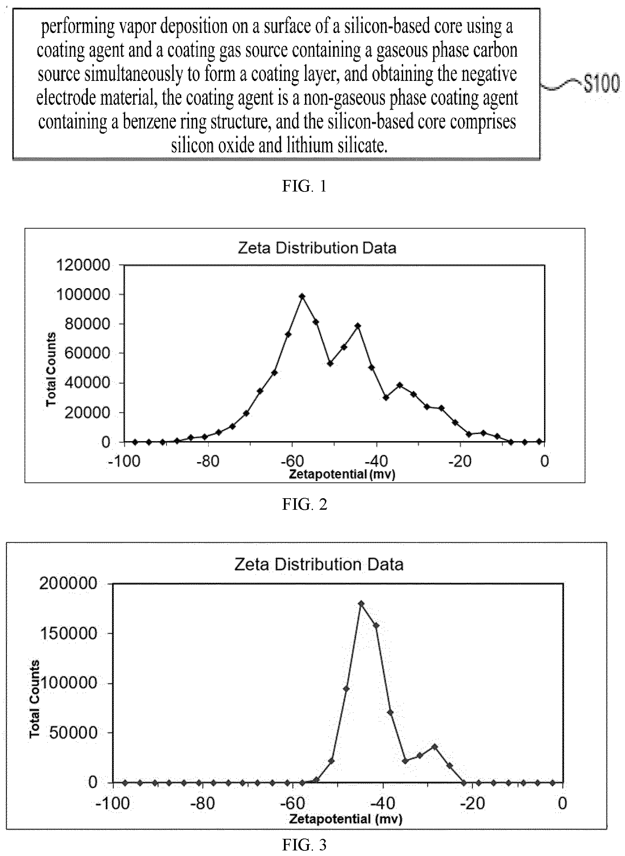

In a second aspect, an example of the present disclosure provides a preparation method of the anode material, as shown in FIG. 1, including the following steps:
S100: vapor deposition is performed on a surface of a silicon-based core using simultaneously a coating agent and a coating gas source containing a gaseous phase carbon source to form a coating layer, and the anode material is obtained. The coating agent is a non-gaseous phase coating agent containing a benzene ring structure, and the silicon-based core includes the silicon oxide and the lithium silicate.

In some embodiments, the non-gaseous phase coating agent includes a solid-phase coating agent and/or a liquid-phase coating agent.

According to the preparation method of the anode material provided by the present disclosure, the anode material is prepared by performing the vapor deposition on the silicon-based core using a gaseous phase carbon source. Meanwhile, a solid-phase coating agent and/or a liquid-phase coating agent are added for the vapor deposition. During the vapor deposition, due to different dissociation efficiencies of the different carbon sources at the same temperature, the deposition efficiencies on the surface of the silicon-based core also varies. Different types of carbon sources are sequentially deposited on the surface of the silicon-based core, so that differential deposition can be formed on the surface of the silicon-based core. The carbon material formed by dissociation of the gaseous phase carbon source is deposited on the surface of the silicon-based core to form the coating layer. Simultaneously, the carbon material formed by dissociation of the solid-phase coating agent and/or the liquid-phase coating agent is deposited into the coating layer and buried in the coating layer. Since the solid-phase coating agent and/or the liquid-phase coating agent contain the benzene ring structure, which is mainly derived from aromatic low-melting-point organic compounds, these organic compounds can further modify and functionalize the surface of the coating layer during the carbonization process, so that the surface of the coating layer of the anode material is optimized, and the surface of the anode material can be regulated, thereby controlling the solid-liquid interface reaction between the anode material and the electrolyte, and improving the processing performance and the cycle performance of the anode material.

The preparation method provided in this solution is described in detail below.

In some embodiments, the preparation steps of the silicon-based core include: a mixture containing silicon oxide and a lithium source is performed pre-lithiation treatment to obtain a pre-lithium silicon-based core.

In some embodiments, the silicon oxide is silicon oxide.

In some embodiments, the lithium source includes at least one of lithium hydride, alkyl lithium, metallic lithium, lithium aluminum hydride, lithium amino, lithium borohydride, and silicon lithium alloy.

In some embodiments, the mass ratio of silicon oxide to lithium source is (85-99):(1-15), which may specifically be 85:15, 88:12, 90:10, 92:8, 95:5, 96:4, 97:3, 98:2, or 99:1, etc., or may be another value within the above range, which is not limited herein.

In some embodiments, the time of the pre-lithiation treatment is 0.5h to 24.0h, which may specifically be 0.5h, 1h, 3h, 5h, 8h, 10h, 12h, 15h, 18h, 20h, or 24h, etc., or may be another value within the above range, which is not limited herein.

In some embodiments, the temperature of the pre-lithiation treatment is 300°C to 1000°C, which may specifically be 300°C, 400°C, 500°C, 600°C, 700°C, 800°C, 900°C, or 1000°C, etc., or may be another value within the above range, which is not limited herein.

In some embodiments, the pre-lithiation treatment is performed in an inert gas atmosphere that includes at least one of helium, neon, argon, krypton, and xenon.

In some embodiments, before the pre-lithiation treatment of the mixture containing the silicon oxide and the lithium source, the method further includes: the silicon oxide and the lithium source are mixed and then are performed shaping treatment to obtain the mixture containing the silicon oxide and the lithium source.

In some embodiments, before the pre-lithiation treatment of the mixture containing the silicon oxide and the lithium source, the method further includes: the silicon oxide and the lithium source are mixed and then are performed shaping treatment to obtain the mixture containing the silicon oxide and the lithium source. The shaping treatment includes at least one of crushing, ball milling, grinding and gas crushing.

In some embodiments, before performing the vapor deposition on the silicon-based core with the gaseous phase carbon source, the method further includes: the silicon-based core is subjected to a graded treatment and then a purification treatment.

It can be understood that, the silicon-based core can be performed the graded treatment to control the particle size range of the silicon-based core. A specific surface area and an outer surface modification surface of the silicon-based core can be effectively regulated by controlling the particle size of the silicon-based core, thereby facilitating to control deposition efficiency of the anode material and the construction of the diversified surface of the material. The silicon-based core can be performed the purification treatment to form a differentiated adsorption interface on the outer surface of the silicon-based core, so that the coating layer can form a differentiated deposition during the deposition process, thereby regulating the surface, achieving the surface synthesis regulation and the synthesis of the preferred surface.

In some embodiments, the graded treatment includes a gas flow graded treatment.

In some embodiments, the average particle size of the silicon-based core is 2.0µm to 10.0µm, which may specifically be 2.0µm, 3.0µm, 4.0µm, 5.0µm, 6.0µm, 7.0µm, 8.0µm, 9.0µm or 10.0µm, etc., or may be another value within the above range, which is not limited herein.

In some embodiments, the step of the purification treatment includes washing and drying the graded silicon-based core in a solvent.

In some embodiments, the step of the purification treatment includes washing and drying the graded silicon-based core in the solvent, and the solvent includes at least one of ethanol, acetone, N,N-dimethylformamide, N-methylpyrrolidone, dimethyl sulfoxide and ethylene glycol dimethyl ether.

In some embodiments, the step of purification treatment includes washing and drying the graded silicon-based core in the solvent, and the washing time is 2h to 10h. The washing time may specifically be 2h, 3h, 4h, 5h, 6h, 7h, 8h, 9h, or 10h, etc., which is not limited herein.

In some embodiments, the step of purification treatment includes washing and drying the graded silicon-based core in the solvent, and the drying temperature is 45°C to 80°C, which may specifically be 45°C, 50°C, 55°C, 60°C, 65°C, 70°C, 75°C, or 80°C, etc., or may be another value within the above range, which is not limited herein.

In some embodiments, the step of purification treatment includes washing and drying the graded silicon-based core in the solvent, and the drying treatment time is 3h to 48h, which may specifically be 3h, 5h, 10h, 12h, 15h, 18h, 20h, 25h, 30h, 35h, 40h, 45h or 48h, etc., or may be another value within the above range, which is not limited herein.

In some embodiments, the raw material of the gaseous phase carbon source includes at least one of methane, ethane, ethylene, acetylene, propyne, propylene, propane, formaldehyde, acetaldehyde, methanol, toluene, benzene, styrene, and phenol.

In some embodiments, the flow rate of the gaseous phase carbon source is 200mL/min to 5000mL/min, which may specifically be 200mL/min, 500mL/min, 800mL/min, 1000mL/min, 2000mL/min, 3000mL/min, 4000mL/min, 4500mL/min, or 5000mL/min, etc., or may be another value within the above range, which is not limited herein.

In some embodiments, the deposition temperature of the vapor deposition is 400°C to 1200°C, which may specifically be 400°C, 500°C, 600 °C, 700°C, 800°C, 900°C, 1000°C, 1100°C, or 1200°C, etc., or may be another value within the above range, which is not limited herein. By controlling the deposition temperature within the above range, the cracking efficiency of the gaseous phase carbon source can be controlled, thereby regulating the deposition efficiency of the carbon material on the surface of the anode active material, and at the same time controlling the volatilization efficiency of the solid-phase coating agent and the liquid-phase coating agent, as well as the functional group retention efficiency. The deposition temperature is controlled within the temperature range, ensuring that the size of silicon crystal grains can be controlled within a certain range, while also ensuring the carbonization degree of the anode material, reducing the proportion of C-H bonds in the anode material, and increasing the conductivity of the carbon coating layer, thereby improving the conductivity of the anode material.

In some embodiments, the deposition time of the vapor deposition is 1h to 24h, which may specifically be 1h, 3h, 5h, 8h, 10h, 12h, 15h, 18h, 20h, or 24h, etc., which is not limited herein. It can be understood that, the deposition time of the vapor deposition is too long, which easily causes the coating layer to be too thick, and the deposition time of the vapor deposition is too short, which easily causes the coating layer to be too thick. Controlling the deposition time within the above range can control the thickness of the coating layer, which facilitates to control the thickness of the coating layer within an ideal range.

In some embodiments, the deposition pressure of the vapor deposition is 10KPa to 0.1MPa, which may specifically be 10KPa, 20KPa, 30KPa, 40KPa, 50KPa, 60KPa, 70KPa, 80KPa, 90KPa, or 0.1MPa, etc., which is not limited herein. Controlling the deposition pressure within the above range can control the compactness of the coating layer, so that the coating layer has good compactness, improving the stability of the anode material, thereby improving the cycle performance of the anode material.

In some embodiments, an auxiliary carrier gas is further added during the vapor deposition. It can be understood that, the solid-phase coating agent and/or the liquid-phase coating agent can be brought into a vapor deposition furnace through the auxiliary carrier gas for vapor deposition. Meanwhile, the solid-phase coating agent and/or the liquid-phase coating agent can be deposited into the coating layer during the deposition process to perform surface modification and functional doping on the coating layer of the anode material, thereby achieving surface interface optimization and realizing regulation of the surface of the material. At the same time, the auxiliary carrier gas can accelerate the cracking of the carbon source, increasing the cracking rate of the carbon source and the rate of the vapor deposition. The auxiliary carrier gas can increase the terminal structure of the carbon chain, so that different types of carbon materials are deposited on the surface of the anode material, thereby optimizing the pore environment of the anode material.

In some embodiments, the auxiliary carrier gas is further added during the vapor deposition, and the auxiliary carrier gas includes at least one of H₂, CO₂, NH₃, and Ar.

In some embodiments, the auxiliary carrier gas is further added during the vapor deposition, and a flow rate of the auxiliary carrier gas is 100mL/min to 8000mL/min, which may specifically be 100mL/min, 500mL/min, 1000mL/min, 2000mL/min, 3000mL/min, 4000mL/min, 5000mL/min, 6000mL/min, 7000mL/min, or 8000mL/min, etc., or may be another value within the above range, which is not limited herein.

In some embodiments, the auxiliary carrier gas is further added during the vapor deposition, and a flow ratio of the gaseous phase carbon source to the auxiliary carrier gas is (3-9.5):(0.5-7), which may specifically be 3:7, 4:6, 5:5, 6:4, 7:3, 8:2, 9: 1, or 9.5:0.5, etc., or may be another value within the above range, which is not limited herein.

In some embodiments, the auxiliary carrier gas is further added during the vapor deposition, and a volume ratio of the gaseous phase carbon source to the auxiliary carrier gas is (3-9.5):(0.5-7), which may specifically be 3:7, 4:6, 5:5, 6:4, 7:3, 8:2, 9: 1, or 9.5:0.5, etc., or may be another value within the above range, which is not limited herein.

In some embodiments, the vapor deposition is performed in a deposition chamber of the vapor deposition device, and a rotation speed of the deposition chamber is 0.1 r/min to 10 r/min , which may specifically be 0.1 r/min , 0.5 r/min , 1 r/min , 2 r/min , 3 r/min , 4 r/min , 5 r/min, 6 r/min , 7 r/min , 8 r/min , 9 r/min , or 10 r/min , etc., or may be another value within the above range, which is not limited herein. The rotation speed of the deposition chamber is controlled within the above range, which facilitates to improve the uniformity of deposition and coating between the particles of the anode material.

In some embodiments, the solid-phase coating agent includes at least one of tetracarboxylic acid anhydride, copper phthalocyanine, substituted or unsubstituted naphthalene, substituted or unsubstituted anthracene, substituted or unsubstituted phenanthrene, substituted or unsubstituted pyrene, substituted or unsubstituted biphenyl, substituted or unsubstituted terphenyl, C₆₀, or substituted or unsubstituted phenalene.

In some embodiments, the liquid-phase coating agent includes at least one of toluene, xylene, styrene, ethylene glycol dimethyl ether, or butyl toluene.

In some embodiments, the method further includes grading and drying the reaction product of the vapor deposition.

It can be understood that, the powder agglomeration of the anode material can be scattered by grading the reaction product of the vapor deposition, which facilitates to control the average particle size of the anode material within a preferred range. The moisture in the anode material can be removed by drying the reaction product of the vapor deposition, thereby facilitating improvement of the electrochemical performance of the anode material.

In some embodiments, an average particle size of the anode material is 2µm to 12µm, which may specifically be 2µm, 3µm, 4µm, 5µm, 6µm, 7µm, 8µm, 9µm, 10µm, 11µm, 12µm, etc., which is not limited herein. Preferably, the average particle size of the anode material is 2µm to 9µm.

In some embodiments, the temperature of the drying treatment is 50°C to 120°C, which may specifically be 50°C, 55°C, 60°C, 65°C, 70°C, 75°C, 80°C, 85°C, 90°C, 95°C, 100°C, 110°C, 120°C, etc., or may be another value within the above range, which is not limited herein.

In some embodiments, the time of the drying treatment is 6.0h to 48.0h, which may specifically be 6h, 12h, 15h, 18h, 20h, 24h, 30h, 36h, 40h, 45h, or 48h, etc., or may be another value within the above range, which is not limited herein.

In some embodiments, the method further includes: the product of the vapor deposition is subjected to solid-phase mixing or liquid-phase mixing with the coating material. The coating material includes at least one of nitride, metal oxide, phosphate and silicate.

In some embodiments, the step of solid-phase mixing the product of the vapor deposition with the coating material includes: a mixture containing the product of the vapor deposition and the coating material is performed a grinding treatment and a heat treatment.

In some embodiments, the step of solid-phase mixing the product of the vapor deposition with the coating material includes: the mixture containing the product of the vapor deposition and the coating material is performed the grinding treatment and the heat treatment. The time of the grinding treatment is 0.5h to 48h, which may specifically be 0.5h, 1h, 3h, 8h, 12h, 15h, 18h, 24h, 36h, 40h, 45h, or 48h, etc., which is not limited herein.

In some embodiments, the step of solid-phase mixing the product of the vapor deposition with the coating material includes: the mixture containing the product of the vapor deposition and the coating material is performed the grinding treatment and the heat treatment. The temperature of the heat treatment is 400°C to 1000°C, and the time of the heat treatment is 1.0h to 24.0h.

The temperature of the heat treatment may specifically be 400°C, 450°C, 500°C, 600°C, 800°C, 900°C, 1000°C, etc., which is not limited herein. The time of the heat treatment may specifically be 1h, 3h, 5h, 8h, 12h, 15h, 18h, 20h, or 24h, etc., which is not limited herein.

In some embodiments, the step of solid-phase mixing the product of the vapor deposition with the coating material includes: the mixture containing the product of the vapor deposition and the coating material is performed the grinding treatment and the heat treatment. The heat treatment is performed under a protective atmosphere including at least one of nitrogen, helium, argon, neon, and krypton.

In some embodiments, the step of liquid-phase mixing the product of the vapor deposition with the coating material includes: a mixed coating solution containing the product of the vapor deposition and the coating material is performed a drying treatment and a heat treatment.

In some embodiments, the step of liquid-phase mixing the product of the vapor deposition with the coating material includes: the mixed coating solution containing the product of the vapor deposition and the coating material is performed the drying treatment and the heat treatment. The mixed coating solution includes a polar solvent.

In some embodiments, the step of liquid-phase mixing the product of the vapor deposition with the coating material includes: the mixed coating solution containing the product of the vapor deposition and the coating material is performed the drying treatment and the heat treatment. The polar solvent includes at least one of water, absolute ethyl alcohol, methanol and isopropanol.

In some embodiments, the step of liquid-phase mixing the product of the vapor deposition with the coating material includes: the mixed coating solution containing the product of the vapor deposition and the coating material is performed the drying treatment and the heat treatment. The temperature of the drying treatment is 50°C to 120°C, and the time of the drying treatment is 6h to 48h.

In some embodiments, the step of liquid-phase mixing the product of the vapor deposition with the coating material includes: the mixed coating solution containing the product of the vapor deposition and the coating material is performed the drying treatment and the heat treatment. The temperature of the heat treatment is 80°C to 150°C, and the time of the heat treatment is 3.0h to 48.0h.

The temperature of the heat treatment may specifically be 80°C, 90°C, 100°C, 110°C, 120°C, 130°C, 140°C, or 150°C, etc., which is not limited herein. The time of the heat treatment may specifically be 3h, 5h, 8h, 12h, 15h, 18h, 24h, 30h, 36h, 45h, or 48h, etc., which is not limited herein.

In some embodiments, the step of liquid-phase mixing the product of the vapor deposition with the coating material includes: the mixed coating solution containing the product of the vapor deposition and the coating material is performed the drying treatment and the heat treatment. The heat treatment is performed under a protective atmosphere including at least one of nitrogen, helium, argon, neon, and krypton.

According to a third aspect, an embodiment of the present disclosure provides a lithium ion battery. The lithium ion battery includes the anode material according to the first aspect or the preparation method of the anode material according to the second aspect.

### Example

### Example 1

(1) 200g of lithium hydride and 1800g of silicon monoxide were mixed, then placed in a vacuum ball mill and subjected to vacuum dry ball milling for 60 minutes to obtain a mixture containing lithium hydride and silicon monoxide . The mixture was then placed in an atmosphere protection heat treatment device, where argon was introduced, and a pre-lithiation treatment was performed at 1000°C for 12 hours to obtain a silicon-based core. Finally, the silicon-based core was subjected to an airflow grading treatment until the average particle size was 5.0µm.
(2) 1000g of the silicon-based core (with an average particle size of 5.0µm) was weighed, washed with deionized water for 30 minutes, then washed and soaked with ethanol for 3 hours, and dried in a vacuum drying oven at 80°C for 24 hours.
(3) The obtained sample was placed in a deposition chamber of a vapor deposition furnace. Methane, acetylene and ethylene gas with a volume ratio of 1:1:1 were introduced into the deposition chamber at a rate of 1000ml/min as a gaseous phase carbon source. Meanwhile, tetracarboxylic acid anhydride (PTCDA), a solid-phase coating agent, was placed at the front end of the vapor deposition furnace. The air pressure in the deposition chamber was regulated by an air pressure valve. After the vacuum degree in the reaction chamber was vacuumized, argon (Ar) was introduced into the reaction chamber at a rate of 1000ml/min as an auxiliary carrier gas, and then the vapor deposition was performed at 450°C for 10 hours, with the flow ratio of the gaseous phase carbon source to Ar set at 1:1, the rotation speed of the deposition chamber at 5r/min, and the deposition pressure at 0.05MPa.
(4) The product of the vapor deposition was graded and then dried in the vacuum drying oven at 100°C for 24 hours to obtain the anode material.

The anode material prepared in this example includes the silicon-based core and the carbon coating layer located on at least part of a surface of the active material, and the silicon-based core includes the silicon oxide and the lithium silicate.

20mg of the anode material was dissolved in 10ml of deionized water to form a slurry, and a Zeta potential of the slurry was tested using a nano-particle size and a Zeta potential analyzer. In a Zeta potential test distribution chart of the slurry, as shown in FIG. 2, the highest intensity of the first characteristic peak in the Zeta potential range of -50mV to -40mV is I₁=78769, the highest intensity of the second characteristic peak in the Zeta potential range of -65mV to -50mV is I₂=98739, and the highest intensity of the third characteristic peak in the Zeta potential range of -35mV to -25mV is I₃=38278. I₂/I₁=1.25, and I₃/I₁=0.486.

The average particle size of the anode material is 4.92µm, the specific surface area is 1.57m²/g, the tap density is 0.98g/cm³, and the mass content of the carbon element in the anode material is 4.93%, based on the mass of the anode material being 100%, the mass content of lithium in the anode material is 9.55%, and the mass content of water was 0.21%.

### Example 2

(1) 200g of lithium hydride and 1800g of silicon monoxide were mixed, then placed in a vacuum ball mill and subjected to vacuum dry ball milling for 60 minutes to obtain a mixture containing lithium hydride and silicon monoxide . The mixture was then placed in an atmosphere protection heat treatment device, where argon was introduced, and a pre-lithiation treatment was performed at 1000°C for 12 hours to obtain a silicon-based core. Finally, the silicon-based core was subjected to an airflow grading treatment until the average particle size was 5.0µm.
(2) 1000g of the silicon-based core (with an average particle size of 5.0µm) was weighed, washed with deionized water for 30 minutes, then washed and soaked with acetone for 3 hours, and dried in a vacuum drying oven at 80°C for 24 hours.
(3) The obtained sample was placed in a deposition chamber of a vapor deposition furnace. Methane was introduced into the deposition chamber at 1000mL/min as a gaseous phase carbon source. Meanwhile, copper phthalocyanine, a solid-phase coating agent, was placed at the front end of the vapor deposition furnace. The air pressure in the deposition chamber was regulated by an air pressure valve. After the vacuum degree in a reaction chamber was vacuumized, Ar and NH₃ with the volume ratio of 5: 1 were introduced into the reaction chamber at 500mL/min as an auxiliary carrier gas, and then the vapor deposition was performed at 500°C for 12 hours, with the flow ratio of the gaseous phase carbon source to the auxiliary carrier gas (Ar and NH₃) set at 2: 1, the rotation speed of the deposition chamber at 5r/min, and the deposition pressure at 0.03MPa.
(4) The product of the vapor deposition was graded and then dried in the vacuum drying oven at 100°C for 24 hours to obtain the anode material.

The anode material prepared in this example includes the silicon-based core and the carbon coating layer located on at least part of a surface of the silicon-based core, and the silicon-based core includes the silicon oxide and the lithium silicate.

20 mg of the anode material was dissolved in 10ml of deionized water to form a slurry, and a Zeta potential of the slurry was tested using a nano-particle size and a Zeta potential analyzer. In a Zeta potential test distribution chart of the slurry, as shown in FIG. 3, the highest intensity of the first characteristic peak in the Zeta potential range of -50mV to -40mV is I₁=179809, the highest intensity of the second characteristic peak in the Zeta potential range of -65mV to -50mV is I₂=21756, and the highest intensity of the third characteristic peak in the Zeta potential range of -35mV to -25mV is I₃=36206. I₂/I₁=0.121, and I₃/I₁=0.201.

The average particle size of the anode material is 5.1µm, the specific surface area is 1.72m²/g, the tap density is 0.99g/cm³, and the mass content of the carbon element in the anode material is 5.12%, based on the mass of the anode material being 100%, the mass content of lithium in the anode material is 9.13%, and the mass content of water was 0.11%.

### Example 3

(1) 160g of lithium hydride and 1840g of silicon monoxide were mixed, then placed in a vacuum ball mill and subjected to vacuum dry ball milling for 60 minutes to obtain a mixture containing lithium hydride and silicon monoxide . The mixture was then placed in an atmosphere protection heat treatment device, where argon was introduced, and a pre-lithiation treatment was performed at 1000°C for 12 hours to obtain a silicon-based core. Finally, the silicon-based core was subjected to an airflow grading treatment until the average particle size was 5.0µm.
(2) 1000g of silicon-based core (with an average particle size of 5.0µm) was weighed, washed with deionized water for 30 minutes, then washed and soaked with N,N-dimethylformamide for 1 hour, and dried in a vacuum drying oven at 80°C for 24 hours.
(3) The obtained sample was placed in a deposition chamber of a vapor deposition furnace. Methane, acetylene, ethylene and propane gas with a volume ratio of 1:1:1:3 were introduced into the deposition chamber at a rate of 1500mL/min as a gaseous phase carbon source. Meanwhile, toluene, a liquid-phase coating agent, was placed at the front end of the vapor deposition furnace. The air pressure in the deposition chamber was regulated by an air pressure valve. After the vacuum degree in a reaction chamber was vacuumized, Ar and NH₃ with the volume ratio of 5: 1 were introduced into the reaction chamber at a rate of 500mL/min as an auxiliary carrier gas, and then the vapor deposition was performed at 800°C for 8 hours, with the flow ratio of the gaseous phase carbon source to the auxiliary carrier gas (Ar and NH₃) set at 3:1, the rotation speed of the deposition chamber at 5r/min, and the deposition pressure at normal pressure.
(4) The product of the vapor deposition was graded and then dried in the vacuum drying oven at 100°C for 24 hours to obtain the anode material.

The anode material prepared in this example includes the active material and the carbon coating layer located on at least part of a surface of the silicon-based core, and the silicon-based core includes the silicon oxide and the lithium silicate.

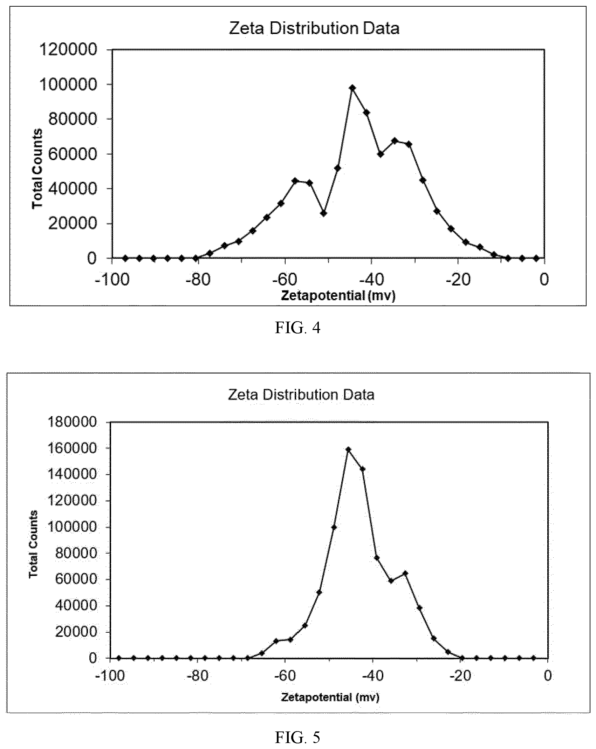

20mg of the anode material was dissolved in 10ml of deionized water to form a slurry, and a Zeta potential of the slurry was tested using a nano-particle size and a Zeta potential analyzer. In a Zeta potential test distribution chart of the slurry, as shown in FIG. 4, the highest intensity of the first characteristic peak in the Zeta potential range of -50mV to -40mV is I₁=97941, the highest intensity of the second characteristic peak in the Zeta potential range of -65mV to -50mV is I₂=44480, and the highest intensity of the third characteristic peak in the Zeta potential range of -35mV to -25mV is I₃=67448. I₂/I₁=0.45, and I₃/I₁=0.689.

The average particle size of the anode material is 5.1µm, the specific surface area is 1.29m²/g, the tap density is 0.97g/cm³, and the mass content of the carbon element in the anode material is 4.98%, based on the mass of the anode material being 100%, the mass content of lithium in the anode material is 7.13%, and the mass content of water was 0.17%.

### Example 4

Different from Example 1, the deposition temperature during the vapor deposition was 600°C.

The anode material prepared in this example includes the silicon-based core and the carbon coating layer located on at least part of a surface of the silicon-based core, and the silicon-based core includes the silicon oxide and the lithium silicate.

20mg of the anode material was dissolved in 10ml of deionized water to form a slurry, and a Zeta potential of the slurry was tested using a nano-particle size and a Zeta potential analyzer. In a Zeta potential test distribution chart of the slurry, as shown in FIG. 5, the highest intensity of the first characteristic peak in the Zeta potential range of -50mV to -40mV is I₁=159008, the highest intensity of the second characteristic peak in the Zeta potential range of -65mV to -50mV is I₂=50380, and the highest intensity of the third characteristic peak in the Zeta potential range of -35mV to -25mV is I₃=64524. I₂/I₁=0.317, and I₃/I₁=0.406.

The average particle size of the anode material is 5.12µm, the specific surface area is 1.58m²/g, the tap density is 1.02g/cm³, and the mass content of the carbon element in the anode material is 4.99%, based on the mass of the anode material being 100%, the mass content of lithium in the anode material is 9.04%, and the mass content of water was 0.21%.

### Example 5

Different from Example 1, the deposition temperature during the vapor deposition was 900°C.

The anode material prepared in this example includes the active material and the carbon coating layer located on at least part of a surface of the silicon-based core, and the active material includes the silicon oxide and the lithium silicate.

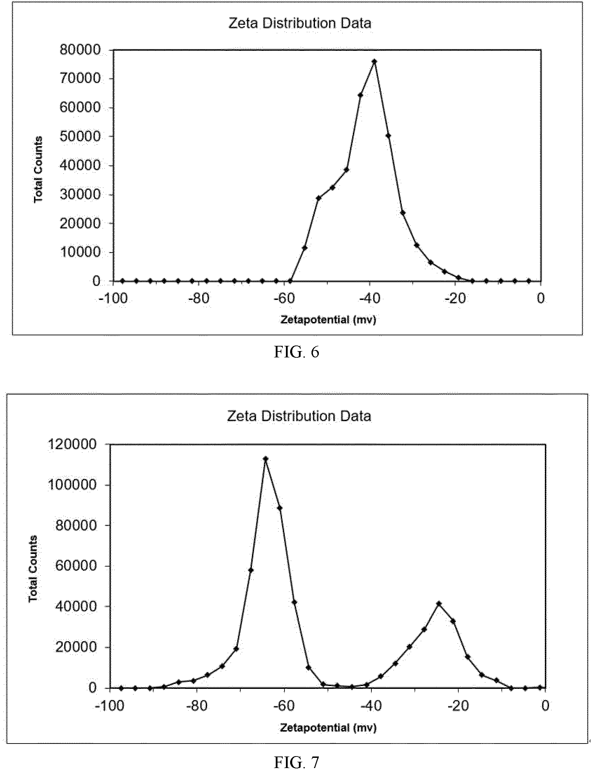

20 mg of the anode material was dissolved in 10ml of deionized water to form a slurry, and a Zeta potential of the slurry was tested using a nano-particle size and a Zeta potential analyzer. In a Zeta potential test distribution chart of the slurry, as shown in FIG. 6, the highest intensity of the first characteristic peak in the Zeta potential range of -50mV to -40mV is I₁ = 76042, the highest intensity of the second characteristic peak in the Zeta potential range of -65mV to -50mV is I₂ = 32434, and the highest intensity of the third characteristic peak in the Zeta potential range of -35mV to -25mV is I₃ = 23691. I₂/I₁=0.427, and I₃/I₁=0.312.

The average particle size of the anode material is 5.0µm, the specific surface area is 1.49m²/g, the tap density is 0.98g/cm³, and the mass content of the carbon element in the anode material is 5.19%, based on the mass of the anode material being 100%, the mass content of lithium in the anode material is 9.36%, and the mass content of water was 0.09%.

### Example 6

(1) 200g of lithium hydride and 1800g of silicon monoxide were mixed, then placed in a vacuum ball mill and subjected to vacuum dry ball milling for 60 minutes to obtain a mixture containing lithium hydride and silicon monoxide . The mixture was then placed in an atmosphere protection heat treatment device, where argon was introduced, and a pre-lithiation treatment was performed at 1000°C for 12 hours to obtain a silicon-based core. Finally, the silicon-based core was subjected to an airflow grading treatment until the average particle size was 5.0µm.
(2) 1000g of the silicon-based core (with an average particle size of 5.0µm) was weighed, washed with deionized water for 30 minutes, then washed and soaked with acetone for 3 hours, and dried in a vacuum drying oven at 80°C for 24 hours.
(3) The obtained sample was placed in a deposition chamber of a vapor deposition furnace. Meanwhile, liquid asphalt, a liquid-phase coating agent, was placed at the front end of the vapor deposition furnace. The air pressure in the deposition chamber was regulated by an air pressure valve. After the vacuum degree in a reaction chamber was vacuumized, acetylene gas was introduced into the deposition chamber at a rate of 1000 mL/min as a gaseous phase carbon source, Ar and NH₃ with a volume ratio of 1: 3 were introduced the deposition chamber at a rate of 3000 mL/min an auxiliary carrier gas, and then vapor deposition was performed at 700°C for 12 hours, with the flow ratio of the gaseous phase carbon source to the auxiliary carrier gas (Ar and NH₃) set at 1: 3, the rotation speed of the deposition chamber at 5r/min, and the deposition pressure at 0.05MPa.
(4) The product of the vapor deposition was graded and then dried in the vacuum drying oven at 100°C for 24 hours to obtain the anode material.

The anode material prepared in this example includes the silicon-based core and a large quantity of nitrogen-doped carbon coating layers located on at least part of a surface of the silicon-based core, and the silicon-based core includes the silicon oxide and the lithium silicate.

20mg of the anode material was dissolved in 10ml of deionized water to form a slurry, and a Zeta potential of the slurry was tested using a nano-particle size and a Zeta potential analyzer. In a Zeta potential test distribution chart of the slurry, the highest intensity of the first characteristic peak in the Zeta potential range of -50mV to -40mV is I₁=113024, the highest intensity of the second characteristic peak in the Zeta potential range of -65mV to -50mV is I₂=89211, and the highest intensity of the third characteristic peak in the Zeta potential range of -35mV to -25mV is I₃=21157. I₂/I₁=0.789, and I₃/I₁=0.187.

The average particle size of the anode material is 5.04µm, the specific surface area is 1.68m²/g, the tap density is 1.03g/cm³, and the mass content of the carbon element in the anode material is 4.87%, based on the mass of the anode material being 100%, the mass content of lithium in the anode material is 9.02%, and the mass content of water was 0.19%.

### Example 7

### Different from Example 2:

Before the step (4), the method further includes: 65g of aluminum chloride was weighed and dissolved in 2000g of deionized water, and stirred for 30 minutes. After the aluminum chloride had fully dissolved, 970g of the product obtained from the vapor deposition was added. The mixture was stirred for 120 minutes, and then centrifuged to remove the solvent. The centrifuged material was vacuum dried at 80°C for 48 minutes.

(5) The dried sample was subjected to heat treatment at 600°C for 12 hours in an argon atmosphere, and then graded to obtain the anode material.

The anode material prepared in this example includes the silicon-based core and the coating layer located on at least a part of a surface of the silicon-based core, the silicon-based core includes the silicon oxide and the lithium silicate, and the coating layer includes the carbon material and the aluminum oxide.

20mg of the anode material was dissolved in 10ml of deionized water to form a slurry, and a Zeta potential of the slurry was tested using a nano-particle size and a Zeta potential analyzer. In a Zeta potential test distribution chart of the slurry, the highest intensity of the first characteristic peak in the Zeta potential range of -50mV to -40mV is I₁=121743, the highest intensity of the second characteristic peak in the Zeta potential range of -65mV to -50mV is I₂=0, and the highest intensity of the third characteristic peak in the Zeta potential range of -35mV to -25mV is I₃=57192. I₂/I₁=0, and I₃/I₁=0.470.

The average particle size of the anode material is 4.93 µm, the specific surface area is 2.01m²/g, the tap density is 1.01g/cm³, and the mass content of the carbon element in the anode material is 0.22%, based on the mass of the anode material being 100%, the mass content of lithium in the anode material is 9.11%, and the mass content of water was 0.08%.

### Example 8

Different from Example 2, in the step (4), the product of the vapor deposition was dried in a vacuum oven at 100°C for 24 hours.

After the step (4), the method further includes: 970g of the dried product of vapor deposition was weighed and uniformly mixed with 25g of aluminum oxide and 5g of lithium fluoride to form a mixture. The mixture was placed in a vacuum ball mill for vacuum dry ball milling for 6 hours. The ball-milled mixture was placed in an argon atmosphere for heat treatment at 900°C for 24 hours, and then graded to obtain the anode material.

The anode material prepared in this example includes the silicon-based core and the coating layer located on at least a part of a surface of the silicon-based core, the silicon-based core includes the silicon oxide and the lithium silicate, and the coating layer includes lithium silicate and aluminum silicate.

20mg of the anode material was dissolved in 10ml of deionized water to form a slurry, and a Zeta potential of the slurry was tested using a nano-particle size and a Zeta potential analyzer. In a Zeta potential test distribution chart of the slurry, the highest intensity of the first characteristic peak in the Zeta potential range of -50mV to -40mV is I₁=102959, the highest intensity of the second characteristic peak in the Zeta potential range of -65mV to -50mV is I₂=0, and the highest intensity of the third characteristic peak in the Zeta potential range of -35mV to -25mV is I₃=23009. I₂/I₁=0, and I₃/I₁=0.223.

The average particle size of the anode material is 5.00µm, the specific surface area is 1.91m²/g, the tap density is 0.96g/cm³, and the mass content of the carbon element in the anode material is 0.18%, based on the mass of the anode material being 100%, the mass content of lithium in the anode material is 9.01%, and the mass content of water was 0.07%.

### Example 9

Different from Example 1, in the step (1), the silicon-based core was subjected to airflow crushing to an average particle size of 2.0µm, and subsequent operations are the same as those in Example 1.

The anode material prepared in this example includes the silicon-based core and the carbon coating layer located on at least part of a surface of the active material, and the silicon-based core includes the silicon oxide and the lithium silicate.

20mg of the anode material was dissolved in 10ml of deionized water to form a slurry, and a Zeta potential of the slurry was tested using a nano-particle size and a Zeta potential analyzer. In a Zeta potential test distribution chart of the slurry, the highest intensity of the first characteristic peak in the Zeta potential range of -50mV to -40mV is I₁=63788, the highest intensity of the second characteristic peak in the Zeta potential range of -65mV to -50mV is I₂=103392, and the highest intensity of the third characteristic peak in the Zeta potential range of -35mV to -25mV is I₃=29303. I₂/I₁=1.62, and I₃/I₁=0.46.

The average particle size of the anode material is 2.07µm, the specific surface area is 2.45m²/g, the tap density is 1.18g/cm³, and the mass content of the carbon element in the anode material is 5.12%, based on the mass of the anode material being 100%, the mass content of lithium in the anode material is 9.67%, and the mass content of water was 0.17%.

### Example 10

Different from Example 1, in the step (1), the silicon-based core was subjected to airflow crushing to an average particle size of 10.0µm, and subsequent operations were the same as those in Example 1.

The anode material prepared in this example includes the silicon-based core and the carbon coating layer located on at least part of a surface of the active material, and the silicon-based core includes the silicon oxide and the lithium silicate.

20mg of the anode material was dissolved in 10ml of deionized water to form a slurry, and a Zeta potential of the slurry was tested using a nano-particle size and a Zeta potential analyzer. In a Zeta potential test distribution chart of the slurry, the highest intensity of the first characteristic peak in the Zeta potential range of -50mV to -40mV is I₁=72129, the highest intensity of the second characteristic peak in the Zeta potential range of -65mV to -50mV is I₂=2309, and the highest intensity of the third characteristic peak in the Zeta potential range of -35mV to -25mV is I₃=52118. I₂/I₁=0.03, and I₃/I₁=0.72.

The average particle size of the anode material is 9.83 µm, the specific surface area is 1.76m²/g, the tap density is 0.98g/cm³, and the mass content of the carbon element in the anode material is 4.96%, based on the mass of the anode material being 100%, the mass content of lithium in the anode material is 9.53%, and the mass content of water was 0.05%.

### Example 11

Different from Example 1, in the step (1), 5g of metal lithium was mixed with 95g of silicon monoxide, and subsequent operations were the same as those in Example 1.

The anode material prepared in this example includes the silicon-based core and the carbon coating layer located on at least part of a surface of the active material, and the silicon-based core includes the silicon oxide and the lithium silicate.

20mg of the anode material was dissolved in 10ml of deionized water to form a slurry, and a Zeta potential of the slurry was tested using a nano-particle size and a Zeta potential analyzer. In a Zeta potential test distribution chart of the slurry, the highest intensity of the first characteristic peak in the Zeta potential range of -50mV to -40mV is I₁=55192, the highest intensity of the second characteristic peak in the Zeta potential range of -65mV to -50mV is I₂=39180, and the highest intensity of the third characteristic peak in the Zeta potential range of -35mV to -25mV is I₃=10732. I₂/I₁=0.71, and I₃/I₁=0.19.

The average particle size of the anode material is 4.93 µm, the specific surface area is 1.92m²/g, the tap density is 0.98g/cm³, and the mass content of the carbon element in the anode material is 5.10%, based on the mass of the anode material being 100%, the mass content of lithium in the anode material is 5.02%, and the mass content of water was 0.02%.

### Comparative Example 1

(1) 200g of lithium hydride and 1800g of silicon monoxide were mixed, then placed in a vacuum ball mill and subjected to vacuum dry ball milling for 60 minutes to obtain a mixture containing lithium hydride and silicon monoxide . The mixture was then placed in an atmosphere protection heat treatment device, where argon was introduced, and a pre-lithiation treatment was performed at 1000°C for 12 hours to obtain a silicon-based core. Finally, the silicon-based core was subjected to an airflow grading treatment until the average particle size was 5.0µm.
(2) 1000g of the silicon-based core (with an average particle size of 5.0µm) was weighed, washed with deionized water for 30 minutes, and dried in a vacuum drying oven at 100°C for 24 hours to obtain the anode material.

The anode material prepared in this comparative example includes the silicon-based core, and the silicon-based core includes silicon oxide and lithium silicate located on at least part of a surface of the silicon oxide.

20mg of the anode material was dissolved in 10ml of deionized water to form a slurry, and a Zeta potential of the slurry was tested using a nano-particle size and a Zeta potential analyzer. In a Zeta potential test distribution chart of the slurry, as shown in FIG. 7, the highest intensity of the first characteristic peak in the Zeta potential range of -50mV to -40mV is I₁=1731, the highest intensity of the second characteristic peak in the Zeta potential range of -65mV to -50mV is I₂=112791, and the highest intensity of the third characteristic peak in the Zeta potential range of -35mV to -25mV is I₃=41337. I₂/I₁=65.16, and I₃/I₁=13.27.

The average particle size of the anode material is 5.0µm, the specific surface area is 1.31m²/g, the tap density is 0.98g/cm³, and the mass content of the carbon element in the anode material is 0.33%, based on the mass of the anode material being 100%, the mass content of lithium in the anode material is 10.31%, and the mass content of water was 0.32%.

### Comparative Example 2

(1) 200g of lithium hydride and 1800g of silicon monoxide were mixed, then placed in a vacuum ball mill and subjected to vacuum dry ball milling for 60 minutes to obtain a mixture containing lithium hydride and silicon monoxide . The mixture was then placed in an atmosphere protection heat treatment device, where argon was introduced, and a pre-lithiation treatment was performed at 1000°C for 12 hours to obtain a silicon-based core. Finally, the silicon-based core was subjected to an airflow grading treatment until the average particle size was 5.0µm.
(2) 1000g of the silicon-based core (with an average particle size of 5.0µm) was weighed, washed with deionized water for 30 minutes, and dried in a vacuum drying oven at 100°C for 24 hours.
(3) The obtained sample was placed in a deposition chamber of a vapor deposition furnace. Methane was introduced into the deposition chamber as a gaseous phase carbon source, and then the vapor deposition was performed at 900°C for 4 hours, with the rotation speed of the deposition chamber at 5r/min, and the deposition pressure at 0.05MPa.
(4) The product of the vapor deposition was graded and then dried in the vacuum drying oven at 100°C for 24 hours to obtain the anode material.

The anode material prepared in this comparative example includes the silicon-based core and the carbon coating layer located on at least part of a surface of the silicon-based core, and the silicon-based core includes silicon oxide and lithium silicate located on at least part of a surface of the silicon oxide.

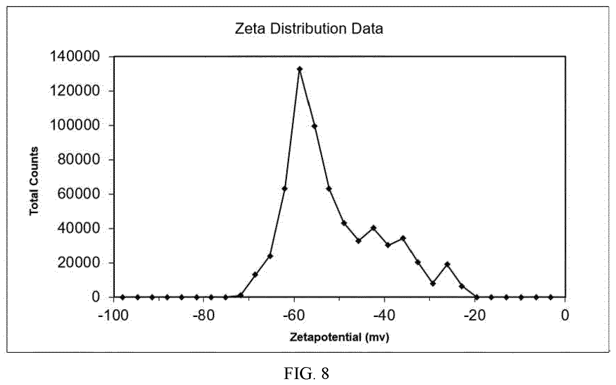

20mg of the anode material was dissolved in 10ml of deionized water to form a slurry, and a Zeta potential of the slurry was tested using a nano-particle size and a Zeta potential analyzer. In a Zeta potential test distribution chart of the slurry, as shown in FIG. 8, the highest intensity of the first characteristic peak in the Zeta potential range of -50mV to -40mV is I₁=43212, the highest intensity of the second characteristic peak in the Zeta potential range of -65mV to -50mV is I₂=132771, and the highest intensity of the third characteristic peak in the Zeta potential range of -35mV to -25mV is I₃=34179. I₂/I₁=3.07, and I₃/I₁=1.26.

The average particle size of the anode material is 5.0µm, the tap density is 0.98g/cm³, the specific surface area is 1.59m²/g, and the mass content of the carbon element in the anode material is 4.54%, based on the mass of the anode material being 100%, the mass content of lithium in the anode material is 9.33%, and the mass content of water was 0.21%.

### Testing Method

### (1) Method for testing the particle size of the anode material:

The particle size of the anode material was tested using a laser particle size analyzer Malvern Mastersizer 2000 to obtain an average particle size.

### (2) Method for testing the specific surface area of the anode material:

The specific surface area was measured using a dynamic specific surface area rapid tester JW-DX with a unit m²/g from Beijing JWGB Sci & Tech Ltd.

### (3) Method for testing the tap density of the anode material:

A Betters tap density tester was used, and a certain amount of sample was weighed and vibrated at 300 times/min for 3000 times to test the tap density.

### (4) Method for testing the mass content of water in the anode material:

The mass content of water in the anode material was tested using thermogravimetric method. The proportion of the mass lost by the anode material in the total weight at 250°C was the mass content of water in the anode material.

### (5) Method for testing the lithium content in the anode material:

The lithium content in the anode material was tested using an Inductively Coupled Plasma (ICP) emission spectrometer: the anode material was heated at high temperature to remove carbon elements. The combustion product was treated sequentially with nitric acid, hydrofluoric acid, then heated to evaporate the acid, followed by hydrochloric acid treatment until complete dissolution. Finally, after reaching a constant volume, the solution was tested using the ICP emission spectrometer.

### (6) Method for testing the mass content of the carbon material in the anode material:

The mass content of the carbon material in the anode material was tested using thermogravimetric analysis.

### (7) pH Testing Method:

The pH was tested according to the GB/T 24533-2019 standard. 5g of the anode material was dissolved in 45g of water, fully stirred for 30 minutes, and then tested using Mitler-Toledo FE20PH. When testing, calibration and operation were conducted following the device's user manual.

### (8) Method for testing the Zeta potential of the anode material:

20mg of the anode material was weighed and dissolved in deionized water to form a slurry with a pH between 10.5 and 12. The Zeta potential was tested on the slurry using a nano-particle size and Zeta potential analyzer (DLS, with a model of Malvern Zetasizer Nano ZS90). In the present disclosure, the total number of the Zeta potential in a specific differential region was considered as the intensity.

### (9) Electrochemical Performance Test:

The button batteries were manufactured according to the method in BTRTC/ZY/01-0200 "Button Battery Method Operating Instruction" by BTR NEW MATERIAL GROUP CO., LTD, with PAA as a binder, prepared into a gel with 5% solid content. The anode active material, the conductive agent (SP), and the binder (PAA) were mixed at a mass ratio of 75:15:10, and uniformly dispersed in a high-speed dispersion machine to form an anode slurry. The slurry was uniformly coated on a copper foil within a thickness of 10um, followed by drying, rolling, punching, and re-drying to obtain the anode. A lithium sheet was used for the positive electrode. The button battery was assembled in the order of a shell, a gasket, a nickel sheet, a lithium sheet, a separator, the anode, and the shell. Battery performance was tested using the method specified in GB/T 24533-2019. Battery performance tests were conducted using an Electric Cabinet from Battery Testing System of Wuhan Land Electronics Co., Ltd: the anode materials prepared in Example 1 to Example 8 and Comparative Example 1 to Comparative Example 2 were assembled into a button battery for testing. A metal lithium sheet was used as the electrode, and the separator was a PP-PE-PP composite membrane with a diameter of 19.2mm. The composition ratio of the electrolyte was EC/EMC/DMC=1:1:1, with a lithium salt (LiPF6) concentration of 1.05mol/L.

Test of the specific capacity of the anode material: the button battery charging and discharging device was used, with a constant current charging at 0.1C rate until 10mV, followed by a constant current charging at 0.02C rate until 5mV, and a constant current discharging at 0.1C rate until the voltage reaches 1.5V cutoff.

50-cycle half-battery test: the button battery charging and discharging device was used as follows: in a first cycle, 0.1C was discharged to 0.01V, 0.01C was stepwise discharged to 0.01V, 0.01C was discharged to 0.005V, and 0.1C was charged to 1.5V; in a second cycle, 0.2C was discharged to 0.01V, 0.02C was stepwise discharged to 0.01V, 0.02C was discharged to 0.005V, and 0.2C was charged to 1.5V; in a third cycle, 0.5C was discharged to 0.01V, 0.05C was stepwise discharged to 0.01V, 0.05C was discharged to 0.005V, and 0.5C was charged to 1.5V; in a fourth cycle to fiftieth cycle, 1C was discharged to 0.01V, 0.1C was stepwise discharged to 0.01V, 0.1C was discharged to 0.005V, and 1C was charged to 1.5V; and in a fifty-first cycle, 0.1C was discharged to 0.01V, 0.01C was stepwise discharged to 0.01V, and 0.01C was discharged to 0.005V

Rate test in full battery performance test: the anode material was mixed with graphite to make the capacity of the anode material reach a standard of 450mAh/g. The rate performance test was performed at room temperature (25°C) by charging and discharging the battery at 0.5C (2.75-4.2V) to obtain a discharge capacity, followed by 1.0C charge/0.5C discharge, 2.0C charge/0.5C discharge, and 3.0C charge/0.5C discharge, to obtain respective discharge capacities. A rate charging capacity ratio was calculated by dividing the discharge capacity of each group by the 0.5C charge/discharge capacity.

**Table 1: Performance Test Results of Anode Material**

| Sample | Capacity mAh/g | First Effect % | pH | Zeta potential I₂/I₁ | Zeta potential I₃/I₁ | Discharge 50-cycle capacity retention rate | Electrode expansion rate after discharge cycles % | Rate charge 1C/0.5C capacity retention rate % | Rate charge 2C/0.5C capacity retentio n rate % | Rate charge 3C/0.5C capacity retention rate % |
|---|---|---|---|---|---|---|---|---|---|---|
| Example 1 | 1403.2 | 91.91 | 11.20 | 1.25 | 0.486 | 88.11 | 32.58 | 89.12 | 76.78 | 58.33 |
| Example 2 | 1392.9 | 93.13 | 10.88 | 0.121 | 0.201 | 87.39 | 32.91 | 90.23 | 78.33 | 57.21 |
| Example 3 | 1449.2 | 88.12 | 10.73 | 0.45 | 0.689 | 87.29 | 32.63 | 88.71 | 76.09 | 56.92 |
| Example 4 | 1395.2 | 91.52 | 10.97 | 0.317 | 0.406 | 87.02 | 32.79 | 89.12 | 76.78 | 58.33 |
| Example 5 | 1415.3 | 92.01 | 11.02 | 0.427 | 0.312 | 88.19 | 32.89 | 90.00 | 76.85 | 57.81 |
| Example 6 | 1412.8 | 91.66 | 11.20 | 0.789 | 0.187 | 88.34 | 32.21 | 90.09 | 77.61 | 58.99 |
| Example 7 | 1360.1 | 89.79 | 11.01 | 0 | 0.470 | 85.01 | 38.39 | 88.22 | 75.58 | 55.74 |
| Example 8 | 1385.4 | 90.29 | 10.85 | 0 | 0.223 | 86.54 | 33.59 | 90.23 | 77.79 | 59.01 |
| Example 9 | 1382.8 | 89.22 | 11.37 | 1.62 | 0.46 | 86.92 | 33.19 | 86.17 | 72.02 | 49.22 |
| Example 10 | 1427.9 | 92.03 | 10.93 | 0.03 | 0.72 | 86.31 | 33.90 | 85.33 | 72.98 | 52.29 |
| Example 11 | 1473.2 | 86.21 | 10.69 | 0.71 | 0.19 | 85.50 | 34.79 | 87.52 | 74.98 | 53.11 |
| Comparative Example 1 | 1309.7 | 85.21 | 11.49 | 65.16 | 13.27 | 30.51 | 63.21 | 60.19 | 30.21 | 15.30 |
| Comparative Example 2 | 1389.3 | 92.1 | 11.40 | 3.07 | 1.26 | 80.33 | 40.32 | 83.19 | 70.25 | 50.01 |

As shown in Table 1, in the anode material prepared in Example 1 to Example 8, the surface of the silicon-based core has a coating layer. The coating layer can effectively isolate the exposure of the silicon-based core in the electrolyte, reducing the loss of active silicon and active lithium in the silicon-based core, and improving the cycle performance of the anode material. The Zeta potential test on the anode material shows that the relationship among the intensities of the characteristic peaks I₁, I₂, and I₃ satisfies 0≤I₂/I₁≤2.0, and 0≤I₃/I₁≤1.0. The surface of the anode material has various different surface combinations (that is, the surface of the anode material is diversified and differentiated), leading to excellent interfacial reactions. The high-speed mass transfer and charge transfer interface between the anode material and the electrolyte can be established, and the mass and charge transfer efficiency can be improved, thereby improving the rate performance of the anode material. By controlling the solid-liquid reaction between the surface of the anode material and the electrolyte, a stable SEI interface is formed, so that the degradation of the electrolyte is reduced, and the cyclic expansion is inhibited, thereby improving the cycle performance of the anode material.

The anode material prepared in Comparative Example 1 is not subjected to coating treatment of the active anode material, resulting in significant loss of active anode material during cycling, greatly reducing the cycle performance of the anode material. The ratios of I₂/I₁ and I₃/I₁ are significantly increased, so that the surface of the anode material no longer has various different surface combinations. During the electrochemical reaction, the uniform surface of the anode material make it difficult to regulate the degradation reaction of the electrolyte. The excessive degradation of the electrolyte led to deposition, causing expansion of the electrode plate, significantly increasing the expansion rate of the electrode plate, and significantly reducing the cycle performance of the anode material. Meanwhile, the excessive degradation of the electrolyte hinders the rapid transport of lithium ions, increasing the lithium ion transport channel, and reducing the lithium ion transport efficiency, thereby significantly reducing the rate performance of the anode material.

The anode material prepared in Comparative Example 2 does not include the solid-phase coating agent and/or the liquid-phase coating agent for surface modification and doping of the coating layer. As a result, the ratios of I₂/I₁ and I₃/I₁ in the anode material is increased, reducing the rationality of charge ion distribution on the surface of the anode material. The surface of the anode material tends to be singulated from diversity, making it difficult to establish a fast ion electron transport channel due to the simplified surface of the anode material. The ion electron transport channel in the anode material is reduced, and the ion transport efficiency is reduced, leading to a reduction in the conductivity of the anode material, thereby decreasing the rate performance of the anode material. Meanwhile, the degradation reaction of the electrolyte in the electrochemical reaction is difficult to regulate through the simplified surface, resulting in excessive degradation of the electrolyte, and causing the electrode plate expansion, thereby reducing the cycle performance of the anode material. The above are merely preferred embodiments of the present disclosure and are not intended to limit the present disclosure. It should be noted that any modifications, equivalent substitutions, improvements, and the like made within the spirit and principle of the present disclosure shall fall within the scope of the present disclosure.

## Claims

1. An anode material, comprising a silicon-based core and a coating layer on at least part of a surface of the silicon-based core,
wherein the silicon-based core comprises silicon oxide and lithium silicate, and the coating layer comprises a carbon material; and
wherein 20 mg of the anode material is dissolved in 10 ml of deionized water to form a slurry, and a Zeta potential test is performed on the slurry by a nano-particle size and Zeta potential analyzer;
wherein in a Zeta potential test distribution chart of the slurry, a highest intensity of a first characteristic peak in a Zeta potential range of -50mV to -40mV is denoted as I₁, a highest intensity of a second characteristic peak in a Zeta potential range of -65mV to -50mV is denoted as I₂, and a highest intensity of a third characteristic peak in a Zeta potential range of -35mV to -25mV is denoted as I₃, and a relationship among I₁, I₂, and I₃ satisfies: 0≤I₂/I₁≤2.0, and 0≤I₃/I₁≤1.0.

2. The anode material according to claim 1, wherein the carbon material comprises at least one of graphite, amorphous carbon, diamond-like carbon, a carbon fiber, and carbide.

3. The anode material according to claim 1, wherein the coating layer further comprises at least one of nitride, metal oxide, phosphate, and silicate.

4. The anode material according to claim 3, wherein the anode material comprises at least one of feature (1) or (2):
(1) the nitride comprises at least one of silicon nitride, pyrrole and pyridine; and
(2) the metal oxide comprises at least one of titanium oxide, aluminum oxide, magnesium oxide, lithium oxide, zirconium oxide, cobalt oxide, and vanadium oxide.

5. The anode material according to claim 3, wherein the anode material comprises at least one of feature (1) or (2):
(1) the phosphate comprises at least one of lithium phosphate, aluminum phosphate, lithium aluminum phosphate, lithium aluminum titanium phosphate, magnesium phosphate, lithium magnesium phosphate, calcium phosphate, lithium calcium phosphate, lithium dihydrogen phosphate, ammonium dihydrogen phosphate, diammonium hydrogen phosphate and triammonium phosphate; and
(2) the silicate comprises at least one of lithium silicate, magnesium silicate, aluminum silicate, magnesium aluminum silicate, lithium magnesium silicate, calcium silicate, magnesium calcium silicate, lithium calcium silicate and lithium aluminum silicate.

6. The anode material according to claim 1, wherein at least part of the lithium silicate is located on a surface of the silicon oxide, and the lithium silicate is distributed on the surface of the silicon oxide in a dispersed manner.

7. The anode material according to claim 1, wherein a mass content of the carbon material is 0.5% to 10% based on 100% of a mass of the anode material.

8. The anode material according to claim 1, wherein a mass content of lithium in the anode material is 2% to 15% based on 100% of a mass of the anode material.

9. The anode material according to claim 1, wherein a mass content of lithium in the silicon-based core is 10³ ppm to 10⁵ ppm.

10. The anode material according to claim 1, wherein the lithium silicate has a formula of Li₂O-nSiO₂, where 0<n≤4.

11. The anode material according to claim 1, wherein a pH value of the anode material is 10.0 to 12.3.

12. A method for preparing an anode material, comprising
performing vapor deposition on a surface of a silicon-based core with a coating agent and a coating gas source containing a gaseous phase carbon source simultaneously to form a coating layer, and obtaining the anode material,
wherein the coating agent is a non-gaseous phase coating agent containing a benzene ring structure, and the silicon-based core comprises silicon oxide and lithium silicate.

13. The method according to claim 12, wherein an auxiliary carrier gas is further added during the vapor deposition.

14. The method according to claim 13, further comprising at least one of features (1) to (3):
(1) the auxiliary carrier gas comprises at least one of H₂, CO₂, NH₃ and Ar;
(2) a flow rate of the auxiliary carrier gas is 100 mL/min to 8000 mL/min; and
(3) a flow ratio of the gaseous phase carbon source to the auxiliary carrier gas is (3-9.5) : (0.5-7).

15. A lithium ion battery, comprising the anode material according to any one of claims 1 to 11 or the method for preparing the anode material according to any one of claims 12 to 14.
